Europäisches Patentamt

(19) European Patent Office    (11) Numéro de publication: **0 122 176**

Office européen des brevets                              **B1**

(12)    **FASCICULE DE BREVET EUROPEEN**

(45) Date de publication du fascicule du brevet: **25.04.90**    (51) Int. Cl.⁵: **B 23 G 5/06**

(21) Numéro de dépôt: **84400494.5**

(22) Date de dépôt: **12.03.84**

(54) **Taraud à goujure convexe.**

(30) Priorité: **14.03.83 FR 8304122**

(43) Date de publication de la demande:
**17.10.84 Bulletin 84/42**

(45) Mention de la délivrance du brevet:
**25.04.90 Bulletin 90/17**

(84) Etats contractants désignés:
**AT BE CH DE GB IT LI LU NL SE**

(56) Documents cités:
**DE-C- 132 151**
**FR-A- 805 360**
**GB-A- 15 820**
**SU-A- 294 694**

**MACHINES AND TOOLING, vol. 44, no. 9, 1973,**
**pages 36-37, Melton Mowbray, GB; A.N.**
**REZNIKOV et al.: "New tap design for titanium**
**and creep-resistant alloys"**

(73) Titulaire: **TARAUDS COURCELLE-GAVELLE**
**46-56, rue des Orteaux**
**F-75020 Paris (FR)**

(72) Inventeur: **Gavelle, Dominique**
**43 bis, allée des Côteaux**
**F-93340 Le Raincy (FR)**

(74) Mandataire: **Lepeudry-Gautherat, Thérèse et al**
**ARMENGAUD JEUNE CABINET LEPEUDRY 6,**
**rue du Faubourg Saint Honoré**
**F-75008 Paris (FR)**

Courier Press, Leamington Spa, England.

## Description

La présente invention concerne un taraud constitué par au moins deux peignes périphériquement séparés par une goujure.

Dans les tarauds classiques existant sur le marché, la goujure présente un profil concave. Cette forme apporte une certaine fragilité au taraud, la section transversale de ce dernier étant réduire d'autant. Cette fragilité conduit notamment à un "frétillement" de l'outil, en particulier, lors du taraudage des métaux durs. Dans le cas de tarauds à trou d'huile central, la fragilité est encore accrue par une nouvelle diminution de section.

Le problème posé est donc de trouver un profil de goujure qui affecte moins la résistance des tarauds.

Dans le document SU—A—294.694 est déduit un taraud dont l'extrémité travaillante possède une goujure à profil concave, tandis que la partie restante du taraud possède une goujure à profil convexe. Ainsi, si ladite partie restante est renforcée, l'extrémité travaillante est encore fragile.

Le document DE—C—132.151 concerne un taraud à goujure plate, chaque peigne s'étendant selon une forme concave entre ses deux flancs, qui rend fragiles les bords longitudinaux du peigne.

Enfin, le document GB—A—15.820 concerne un taraud à goujure convexe, chaque peigne s'étendant selon une forme convexe entre ses deux flancs. Ce taraud présente une résistance accrue par rapport aux tarauds précités.

La présente invention vise à proposer un taraud encore plus résistant que le précédent.

Elle concerne à cet effet un taraud comprenant au moins deux peignes périphériquement séparés pr une goujure, dans lequel, lorsqu'il est observé en section transversale sur toute sa longueur de coupe:
— le fond de goujure est convexe, notamment à partir de l'extrémité du taraud;
— les deux flancs de chaque peige sont rectilignes; et
— chaque peigne s'étend selon une forme convexe entre ses deux flancs, (GB—A—15.820) caractérisé en ce que l'angle de coupe radiale de chaque peigne est négatif et en ce que le fond de goujure possède un profil en V saillant.

Avantageusement, le taraud comprend trois peignes.

Avantageusement, le profil du flanc de coupe de chaque peigne est symétrique du profil de son flanc d'arrière coupe, par rapport à un rayon du taraud.

Avantageusement, le fond de goujure, vu dans la section longitudinale du taraud, est parallèle à l'axe longitudinal de celui-ci.

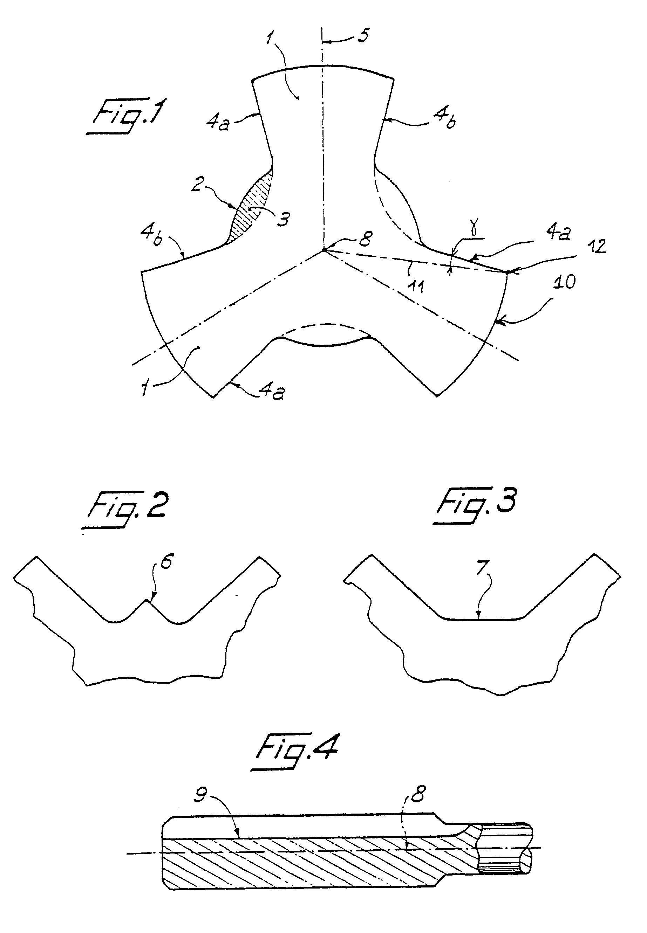

D'autres détails et avantages de l'invention apparaîtront au cours de la description qui suit d'un mode de réalisation non limitatif, à l'aide des figures montrant:
— en figure 1: un profil de taraud représentant une première forme de goujure selon l'invention.

— en figure 2 et 3: deux formes de goujure selon l'invention.
— en figure 4: une coupe longitudinale du taraud montrant le profil longitudinal de goujure selon l'invention.

La figure 1 représente par une section transversale un profil de taraud comprenant des peignes (1) séparés par des goujures dans chacune desquelles le fond (2) est de forme rayonnée convexe. Des pointillés figurant un fond de goujure conforme à l'art antérieure mettent en évidence le gain de section (3) obtenu par le profil selon l'invention. La forme de la goujure selon l'invention se caractérise aussi par le fait que les flancs de goujure (4a, 4b) ont un profil reciligne, aussi bien les flancs (4a) correspondant à la partie travaillante que les flancs (4b) correspondant à l'arrière coupe, à la différence de l'art antérieur, où le profil était concave et engendrait des becs aux entrémités. Le profil des flancs (4a, 4b) selon l'invention apporte donc une solidité supplémentaire au taraud. De plus, le flancs (4a, 4b) ayant un profil rectiligne, ils peuvent être facilement réaffûtés aved une meule assiette, sans souci de raccordement, alors que dans l'art antérieur, il était nécessaire de respecter, lors de l'affûtage, la courbure du flanc.

Une autre caractéristique de l'invention est que le profil du flanc de coupe (4a) de chaque peigne (1) est symétrique du profil de son flanc d'arrière coupe (4b), par rapport à un rayon (5) du taraud. De cette façon, on est assuré d'obtenir le même pouvoir de coupe sur la partie travaillante que sur l'arrière coupe. Cela permet à l'outil de reprendre et de calibrer parfaitement, lors du dévissage, le trou taraudé, surtout s'il s'agit de matériaux très durs. L'expérience montre en effet que les tarauds selon l'art antérieur ne coupent pas au dévissage, et de ce fait, il se produit un effet de coincement engendrant très souvent la rupture de l'outil.

Selon une autre caractéristique de l'invention, l'angle de coupe radiale $\gamma$ de chaque peigne, s'étendant entre le flanc de coupe (4a) et un rayon (11) passant par le bord voisin (12) du peigne, est négatif.

La figure 2 représente une variante de la forme du fond de goujure selon l'invention. Ici, le fond de goujure (6) est en V saillant, forme qui confère à l'outil une rigidité accrue.

La figure 3 représente une autre variante, où le fond de goujure (7) est rectiligne.

La forme convexe du fond de goujure (2, 6, 7) permet aux copeaux de mieux rouler, lorsque ceux-ci sont longs, ou bien de mieux se casser, lorsqu'ils sont courts, par exemple pour les métaux durs.

La forme convexe sera choisie notamment parmi les formes précités en fonction des matériaux à tarauder.

Une caractéristique complémentaire de l'invention est représentée sur la figure 4. Selon l'art antérieur, le fond de goujure présente généralement une certaine conicité, dans le sens longitudinal du taraud, afin de renforcer l'outil en augmentant sa section. Puisque, selon l'invention, la section de l'outil est dèjà augmentée par une forme de fond de goujure (2, 6, 7) convexe, il est possible de supprimer la conicité longitudinale. Le fond de goujure (9) étant alors parfaitement parallèle à l'axe longitudinal (8) du taraud, l'évacuation des copeaux est facilitée. Cette carctéristque s'applique aussi bien pour les tarauds à coupe droite que pour ceux à coupe hélicoïdale.

L'invention trouve une application pour tout problème de taraudage délicat, notamment concernant les matériaux très durs tels que le titane, le Waspalloy, etc. ainsi que tous les aciers dont la dureté est supérieure à 297 BRINNEL.

**Revendications**

1. Taraud comprenant au moins deux peignes (1) périphériquement séparés par une goujure, dans lequel, lorsqu'il est observé en section transversale sur toute la longueur de coupe:
— le fond de goujure (2) est convexe, notamment à partir de l'extrémité du taraud;
— les deux flancs (4a, 4b) de chaque peigne sont rectilignes; et
— chaque peigne s'étend selon une forme (10) convexe entre ses deux flancs,
caractérisé en ce que l'angle de coupe radiale γ de chaque peigne est négatif et en ce que le fond de goujure (6) possède un profil en V saillant.

2. Taraud selon la revendication 1, caractérisé en ce qu'il comprend trois peignes (1).

3. Taraud selon les revendications 1 ou 2, caractérisé en ce que le profil du flanc de coupe (4a) de chaque peigne (1) est symétrique du profil de son flanc d'arrière coupe (4b), par rapport à un rayon (5) du taraud.

4. Taraud selon l'une quelconque des revendications 1 à 3, caractérisé en ce que le fond de goujure (9), vu dans la section longitudinale du taraud, est parallèle a l'axe longitudinal (8) de celui-ci.

**Patentansprüche**

1. Gewindebohrer mit mindestens zwei an ihrem Umfang durch eine Spannut getrennte Kämme (1), bei dem bei Betrachtung des Querschnitts über die ganze Länge der Schneide.
— der Boden der Spannut (2), insbesondere vom Ende des Gewindebohrers her, konvex ist,

— die beiden Flanken (4a, 4b) eines jeden Kammes geradlinig sind und
— jeder Kamm eine Form (10) aufweist, die zwischen seinen beiden Flanken konvex ausgebildet ist,
dadurch gekennzeichnet, daß der Winkel γ der radialen Schneide jedes Kammes negativ ist und der Boden der Spannut (6) ein vorstehendes V-Profil aufweist.

2. Gewindebohrer nach Anspruch 1, dadurch gekennzeichnet, daß er drei Kämme (1) aufweist.

3. Gewindebohrer nach Anspruch 1 oder 2, dadurch gekennzeichnet, daß das Flankenprofil der Schneide (4a) jedes Kammes (1) symmetrisch zum Flankenprofil der rückseitigen Schneide (4b), bezogen auf einen Radius (5) des Gewindebohrers, ausgebildet ist.

4. Gewindebohrer nach einem der Ansprüche 1 bis 3, dadurch gekennzeichnet, daß der Boden der Spannut (9) im Längsschnitt des Gewindebohrers parallel zu dessen Längsachse (8) verläuft.

**Claims**

1. Tap comprising at least two chases (1) peripherally separated by a flute in which, when it is seen in transverse section over the whole of its cutting length:
— the base of the flute (2) is convex, notably starting from the end of the tap;
— the two flanks (4a, 4b) of each chase are straight and
— each chase extends according to a convex shape (10) between its two flanks, characterised in that the radial cutting angle γ of each chase is negative and in that the base of the flute (6) has a shape of a projecting V.

2. Tap according to Claim 1, characterised in that it comprises three chases (1).

3. Tap according to Claim 1 or 2, characterised in that the shape of the cutting flank (4a) of each chase (1) is symmetrical to the shape of its rear cutting flank (4b) with respect to a radius (5) of the tap.

4. Tap according to any one of Claims 1 to 3, characterised in that the base of the flute (9), seen in longitudinal section of the tap, is parallel to the longitudinal axis (8) of this.

Fig.1

Fig.2

Fig.3

Fig.4